Europäisches Patentamt

European Patent Office

Office européen des brevets

(11) Veröffentlichungsnummer: **0 379 084 B1**

# EUROPÄISCHE PATENTSCHRIFT

(45) Veröffentlichungstag der Patentschrift: **06.04.94**

(21) Anmeldenummer: **90100614.8**

(22) Anmeldetag: **12.01.90**

(51) Int. Cl.5: **C08J 9/16**, C08J 9/14, //C08L51/00

Die Akte enthält technische Angaben, die nach dem Eingang der Anmeldung eingereicht wurden und die nicht in dieser Patentschrift enthalten sind.

(54) **Expandierbare Styrolpolymerisate mit hoher Ölbeständigkeit und Verfahren zu ihrer Herstellung.**

(30) Priorität: **18.01.89 DE 3901329**

(43) Veröffentlichungstag der Anmeldung:
**25.07.90 Patentblatt 90/30**

(45) Bekanntmachung des Hinweises auf die Patenterteilung:
**06.04.94 Patentblatt 94/14**

(84) Benannte Vertragsstaaten:
**AT BE DE ES FR GB IT NL**

(56) Entgegenhaltungen:
**EP-A- 0 000 572**
**FR-A- 1 368 544**

**CHEMICAL ABSTRACTS, Band 81, Nr. 20, 1974, Seite 53, Zusammenfassung Nr.121767m, Columbus, Ohio, US; & JP-A-74 28 688**

(73) Patentinhaber: **BASF Aktiengesellschaft**
**Carl-Bosch-Strasse 38**
**D-67063 Ludwigshafen(DE)**

(72) Erfinder: **Hahn, Klaus, Dr.**
**Im Buegen 9**
**D-6719 Kirchheim(DE)**
Erfinder: **Guhr, Uwe, Dr.**
**Beim Hochgericht 9**
**D 6718 Gruenstadt(DE)**
Erfinder: **Hintz, Hans, Dr.**
**Wolframstrasse 4**
**D-6700 Ludwigshafen(DE)**
Erfinder: **Gellert, Roland, Dr.**
**Wittelsbacher Strasse 39**
**D-6730 Neustadt(DE)**

EP 0 379 084 B1

**Beschreibung**

Schaumstoffe auf Basis von Styrol-Acrylnitril-Copolymeren haben wegen ihrer hohen Ölbeständigkeit technische Bedeutung erlangt. Zu ihrer Herstellung wird ein Gemisch aus Styrol und Acrylnitril in wäßriger Suspension in Gegenwart eines Treibmittels polymerisiert. Das dabei resultierende expandierbare Copolymere läßt sich durch Erhitzen zu Schaumstoffperlen expandieren und durch Verschweißen zu beliebigen Schaumstoff-Formkörpern weiterverarbeiten.

Aus CHEMICAL ABSTRACTS, Bd. 81, Nr. 20, 1974, Zusammenfassung Nr. 121767m bzw. JP-A-59/28 688 sind Polymerkörnchen und schäumende Polymerkörnchen bekannt, die durch Polymerisation von Monomeren erhalten wurden, die in vernetzten Polymerperlen absorbiert sind. Beispielsweise wurde eine Mischung von 90 g vernetzten Polystyrolperlen und 810 g Styrol in wäßriger Suspension polymerisiert. Anschließend wurden 540 g der auf diese Weise erhaltenen Körner in einer erneuten Suspensionspolymerisation zusammen mit 270 g Styrol und 90 g Acrylnitril umgesetzt. Nach Behandlung mit einem Treibmittel wurden kugelförmige schäumende Körner erhalten, die auf ein Volumen von 400 ml pro 10 g Körner geschäumt werden konnten.

Wegen der hohen Toxizität des Acrylnitrils ist die Suspensionspolymerisation mit besonderen Gefahren verbunden. Probleme bereitet dabei auch die Entsorgung des Acrylnitril enthaltenden Abwassers. Der Erfindung liegt die Aufgabe zugrunde, expandierbare Styrolpolymerisate mit hoher Ölbeständigkeit nach einem ungefährlichen und umweltfreundlichen Verfahren herzustellen, bei dem keine giftigen Abwässer anfallen.

Überraschenderweise wurde gefunden, daß expandierbare Styrolpolymerisate auf Basis eines Gemisches aus Polystyrol und styrollöslichen Styrol-Acrylnitril-Copolymeren eine hohe Ölbeständigkeit aufweisen und daß sich diese Produkte auf einfache und gefahrlose Weise durch Suspensionspolymerisation einer Lösung von Styrol-Acrylnitril-Copolymeren in Styrol herstellen lassen.

Für den Fachmann war es nicht vorhersehbar, daß derartige Produkte Ölbeständigkeit aufweisen, da Polystyrol, die Hauptkomponente, nicht ölbeständig ist.

Gegenstand der Erfindung sind somit expandierbare Styrolpolymerisate mit hoher Ölbeständigkeit enthaltend

a) 50 bis 83,3 Gew.-% Polystyrol, das unter Mitverwendung von 0,005 bis 0,05 Mol-% eines Vernetzers hergestellt worden ist,
b) 16,7 bis 50 Gew.-% eines styrollöslichen Styrol-Acrylnitril-Copolymeren, wobei der Gehalt an Acrylnitril mindestens 5 Gew.-%, bezogen auf die Summe von a) und b) beträgt.
c) 3 bis 10 Gew.-%, bezogen auf die Summe von a) und b), eines $C_3$-$C_6$-Kohlenwasserstoffs als Treibmittel, und gegebenenfalls
d) übliche Zusatzstoffe in wirksamen Mengen.

Als Hauptkomponente a) enthalten die Produkte Polystyrol in einer Menge von 50 bis 83,3 Gew.-%, vorzugsweise 60 bis 80 Gew.-%, bezogen auf die Summe von a) und b), das 0,005 bis 0,05 Mol-%, bezogen auf Styrol, eines Vernetzers einpolymerisiert enthält, d.h. einer Verbindung mit mehr als einer, vorzugsweise zwei, polymerisierbaren Doppelbindungen, wie Divinylbenzol, Butadien oder Butandioldiacrylat.

Als weitere Komponente b) enthalten die Produkte ein styrollösliches Styrol-Acrylnitril-Copolymeres in einer Menge von 16,7 bis 50 Gew.-%, vorzugsweise 20 bis 40 Gew.-%, bezogen auf die Summe von a) und b). Die Copolymeren enthalten im allgemeinen einen Gehalt an einpolymerisiertem Acrylnitril von etwa 15 bis 35 Gew.-%, insbesondere 20 bis 30 Gew.-%. Bei zu hohem Acrylnitrilgehalt sind die Copolymeren nicht mehr löslich in Styrol.

Die Komponente b) wird hinsichtlich ihrer Menge und ihres Acrylnitril-gehalts so ausgewählt, daß der Gehalt an einpolymerisiertem Acrylnitril, bezogen auf die Summe von a) und b) mindestens 5 Gew.-%, im allgemeinen 5 bis 17 Gew.-%, vorzugsweise 5 bis 10 Gew.-%, beträgt. Das Copolymere weist im allgemeinen einem Schmelzindex MFI (g/10min) zwischen 0,5 und 2,5, vorzugweise zwischen 1,5 und 2,0 auf, gemessen nach DIN 53735. Die treibmittelfreie Mischung aus Polystyrol und dem Styrol-Acrylnitril-Copolymeren weist im allgemeinen einen Schmelzindex MFI (g/10 min) zwischen 1,0 und 2,2, vorzugsweise zwischen 1,5 und 2,0 auf, gemessen nach DIN 53735.

Als Treibmittel enthalten die expandierbaren Styrolpolymerisate 3 bis 10 Gew.-%, vorzugsweise 5 bis 8 Gew.-%, bezogen auf die Summe von a) und b), eines $C_3$- bis $C_6$-Kohlenwasserstoffs, wie Propan, Butan, Isobutan, n-Pentan, i-Pentan, Neopentan und/oder Hexan. Vorzugsweise wird ein handelsübliches Pentan-Isomerengemisch verwendet.

Als weitere Zusatzstoffe können die Produkte übliche Farbstoffe, Füllstoffe, Stabilisatoren, Flammschutzmittel, Synergisten, Keimbildner, Gleitmittel und dergleichen in üblichen wirksamen Mengen enthal-

2

ten.

Die expandierbaren Styrolpolymerisate liegen im allgemeinen in Form von Partikeln, d.h. in Perlform, Granulatform oder in Form von Brocken vor und haben vorteilhaft einen mittleren Durchmesser von 0,1 bis 6 mm, insbesondere 0,4 bis 3 mm. Die Herstellung kann beispielsweise durch Vermischen der Komponenten in der Schmelze in einem Extruder erfolgen, wobei der Strang nach dem Auspressen so rasch abgekühlt wird, daß kein Aufschäumen erfolgt und anschließend zerkleinert wird.

Vorteilhaft erfolgt die Herstellung durch Suspensionspolymerisation in an sich bekannter Weise. Dazu wird das Styrol-Acrylnitril-Copolymere, üblicherweise ein Handelsprodukt, in Styrol gelöst und diese Lösung in wäßriger Suspension polymerisiert, wobei man bei der Polymerisation 0,005 bis 0,05 Mol-%, bezogen auf Styrol, eines Vernetzers zusetzt. Das Treibmittel kann dabei bei der Polymerisation mit vorgelegt werden oder im Laufe der Polymerisation zugefügt werden. Es kann auch erst nach beendeter Polymerisation dem Ansatz zugefügt werden.

Die erhaltenen perlförmigen expandierbaren Styrolpolymerisate werden danach von der wäßrigen Phase abgetrennt, gewaschen und getrocknet.

Die in den Beispielen genannten Teile sind Gewichtsteile.

Beispiel 1

In einem druckfesten Rührkessel wurde eine Mischung aus 200 Teilen Wasser, 0,1 Teilen Natriumpyrophosphat, 100 Teilen einer Lösung von 0,01 Teilen Divinylbenzol und 16,7 Teilen eines Styrol-Acrylnitril-Copolymeren (70/30 Gew.-%) mit einem Schmelzindex (g/10 min) von 1,9 in 83,3 Teilen Styrol, 7 Teilen Pentan, 0,15 Teilen tert.-Butylperoxid, 0,45 Teilen Benzoylperoxid und 4 Teilen einer 10 %igen wäßrigen Lösung von Polyvinylpyrrolidon unter Rühren auf 90°C erhitzt, 5 Stunden bei 90°C gehalten und anschließend 2 Stunden auf 100°C und weitere 2 Stunden auf 120°C erhitzt. Nach dem Abkühlen wurde das erhaltene Perlpolymerisat mit einem mittleren Teilchendurchmesser von ca 1 mm von der wäßrigen Phase abgetrennt, gewaschen und getrocknet.

Das erhaltene expandierbare Styrolpolymerisat wurde in einem handelsüblichen Rührvorschäumer, Typ Rauscher, mit strömendem Wasserdampf auf ein Schüttgewicht von 20 g/l vorgeschäumt. Nach 24 Stunden Zwischenlagerung wurden die Schaumstoffpartikel in einer Blockform, Typ Rauscher, durch Bedampfung mit Wasserdampf und einem Druck von 1,8 bar zu einem Block verschweißt.

Zur Prüfung der Ölbeständigkeit wurden in Anlehnung an die DIN 53 428 jeweils 5 Proben des Schaumstoffs in Würfelform mit 5 cm Kantenlänge 72 Stunden lang in Heizöl und Dieselkraftstoff gelagert. Die Bewertungskriterien sind: 0 = nicht verändert (beständig); 1 = verändert (bedingt beständig); 3 = sehr stark verändert (unbeständig).

Die Ergebnisse sind in der Tabelle zusammengefaßt.

Beispiel 2

Es wurde wie in Beispiel 1 gearbeitet, jedoch 100 Teile einer Lösung von 0,01 Teilen Divinylbenzol und 20 Teilen des Styrol-Acrylnitril-Copolymeren in 80 Teilen Styrol verwendet.

Beispiel 3

Es wurde wie in Beispiel 1 gearbeitet, jedoch 100 Teile einer Lösung von 0,01 Teil Divinylbenzol und 23 Teilen des Styrol-Acrylnitril-Copolymeren in 77 Teilen Styrol verwendet.

Beispiel 4 (Vergleich)

Es wurde wie in Beispiel 3 gearbeitet, jedoch ohne Mitverwendung von Divinylbenzol.

Beispiel 5 (Vergleich)

Es wurde wie in Beispiel 1 gearbeitet, jedoch 100 Teile einer Lösung von 9 Teilen des Styrol-Acrylnitril-Copolymeren in 91 Teilen Styrol verwendet.

Beispiel 6 (Vergleich)

Es wurde wie in Beispiel 1 gearbeitet, jedoch 100 Teile einer Lösung von 0,01 Teilen Divinylbenzol in Styrol verwendet.

BASF Aktiengesellschaft

Tabelle

| Beispiel | a) Polystyrol Gew.-% | b) SAN-Copolymer Gew.-% | a+b AN-Gehalt Gew.-% | Ölbeständigkeit Heizöl | Ölbeständigkeit Dieselkraftstoff |
|---|---|---|---|---|---|
| 1 | 83,3 | 16,7 | 5 | 0 | 0 |
| 2 | 80 | 20 | 6 | 0 | 0 |
| 3 | 77 | 23 | 6,9 | 0 | 0 |
| 4 (Vergleich) | 77 | 23 | 6,9 | 0 | 0 |
| 5 (Vergleich) | 91 | 9 | 2,7 | 1 | 1 |
| 6 (Vergleich) | 100 | - | 0 | 2 | 2 |

4

**Patentansprüche**

1. Expandierbare Styrolpolymerisate mit hoher Ölbeständigkeit, enthaltend
   a) 50 bis 83,3 Gew.-%, bezogen auf die Summe von a) und b), Polystyrol, das unter Mitverwendung von 0,005 bis 0,05 Mol-%, bezogen auf Styrol, eines Vernetzers hergestellt worden ist,
   b) 16,7 bis 50 Gew.-%, bezogen auf die Summe von a) and b), eines styrollöslichen Styrol-Acrylnitril-Copolymeren, wobei der Gehalt an Acrylnitril mindestens 5 Gew.-%, bezogen auf die Summe von a) und b), beträgt,
   c) 3 bis 10 Gew.-%, bezogen auf die Summe von a) und b), eines $C_3$-$C_6$-Kohlenwasserstoffs als Treibmittel, und gegebenenfalls
   d) übliche Zusatzstoffe in wirksamen Mengen.

2. Verfahren zur Herstellung expandierbarer Styrolpolymerisate gemäß Anspruch 1, dadurch gekennzeichnet, daß man das Styrol-Acrylnitril-Copolymere in Styrol löst, in wäßriger Suspension unter Mitverwendung von 0,005 bis 0,05 Mol-%, bezogen auf Styrol, eines Vernetzers polymerisiert und während oder nach der Polymerisation das Treibmittel zufügt.

**Claims**

1. An expandable styrene polymer of high oil resistance, comprising
   a) from 50 to 83.3% by weight, based on the sum of a) and b), of polystyrene which has been prepared using from 0.005 to 0.05 mol-%, based on styrene, of a crosslinking agent,
   b) from 16.7 to 50% by weight, based on the sum of a) and b), of a styrene-soluble styrene-acrylonitrile copolymer in which the level of acrylonitrile is not less than 5% by weight, based on the sum of a) and b),
   c) from 3 to 10% by weight, based on the sum of a) and b), of a $C_3$-$C_6$-hydrocarbon as blowing agent, and optionally
   d) customary additives in effective amounts.

2. A process for preparing an expandable styrene polymer as claimed in claim 1, which comprises dissolving the styrene-acrylonitrile copolymer in styrene, polymerizing in aqueous suspension using from 0.005 to 0.05 mol-%, based on styrene, of a crosslinking agent, and adding the blowing agent during or after the polymerization.

**Revendications**

1. Polymères du styrène expansibles à résistance à l'huile élevée, qui contiennent :
   a) rapportés à la somme de a) et de b), de 50 à 83,3% en poids de polystyrène, qui a été préparé par l'utilisation conjointe, rapporté au styrène, de 0,005 à 0,05% molaire d'un agent de réticulation,
   b) rapportés à la somme de a) et de b), de 16,7 à 50% en poids d'un copolymère du styrène et de l'acrylonitrile, soluble dans le styrène, où la teneur en acrylonitrile atteint au moins 5% en poids, rapportés à la somme de a) et de b),
   c) rapportés à la somme de a) et de b), de 3 à 10% en poids d'un hydrocarbure en $C_3$ à $C_6$ servant d'agent porogène et, éventuellement,
   d) des additifs usuels en proportions actives.

2. Procédé de fabrication de polymères du styrène expansibles selon la revendication 1, caractérisé en ce que l'on dissout le copolymère du styrène et de l'acrylonitrile dans du styrène, on le polymérise en suspension aqueuse en recourant à l'utilisation conjointe, rapporté au styrène, de 0,005 à 0,05% molaire d'un agent de réticulation et on ajoute l'agent porogène pendant ou après la polymérisation.